# EUROPEAN PATENT SPECIFICATION

(11) **EP 3 590 613 B1**
(45) Date of publication and mention of the grant of the patent: **05.10.2022**
(21) Application number: 19191772.3
(22) Date of filing: 03.12.2014
(51) Int. Cl.: B08B 3/00, B08B 3/14, B08B 9/00, B08B 9/093, B08B 17/02, A23N 12/02, A23B 7/153, B05B 14/40, B08B 17/00, B08B 15/02, B60S 3/04, B08B 3/02, B05B 13/04, B05B 13/06, B05B 16/20, B05B 16/40

(54) **MACHINE FOR COLLECTING LIQUID WITH PHYTOSANITARY PRODUCTS**
MASCHINE ZUM SAMMELN VON FLÜSSIGKEIT MIT PHYTOSANITÄREN PRODUKTEN
MACHINE DE COLLECTE DE LIQUIDE COMPORTANT DES PRODUITS PHYTOSANITAIRES

(43) Date of publication of application: 08.01.2020
(62) Divisional of application: 14907344.7
(73) Proprietor: Herreros Muñoz, Ana Victoria, 23310 Mogón (ES); Marín Zamora, Diego Javier, 23310 Mogón (ES)
(72) Inventor: Herreros Muñoz, Ana Victoria, 23310 Mogón (ES); Marín Zamora, Diego Javier, 23310 Mogón (ES)
(74) Representative: Elzaburu S.L.P.

(56) References cited:
- WO-A1-01/15824
- FR-A1- 2 815 891
- US-A- 3 079 935

## Description

### Object of the invention

This invention relates to a machine that collects the surplus liquid from the treatments carried out using equipment for applying phytosanitary products and/or liquid from the cleaning of equipment for applying phytosanitary products, cleans the said equipment for applying and replenishes the said equipment for applying phytosanitary products with water and/or phytosanitary product.

### State of the art

It is known that there is no specific or appropriate place for collecting the surplus liquid from the treatments carried out using equipment for applying phytosanitary products and the liquid from the cleaning of equipment for applying phytosanitary products. Neither is there a specific or appropriate place for cleaning and/or replenishing equipment for applying phytosanitary products.

What is usually done with the surplus liquid from treatments carried out with equipment for applying phytosanitary products is that it is diluted it with water, by adding water to the said equipment for applying, and the treated area is treated again.

Users of equipment for applying phytosanitary products usually clean the said equipment manually in the same place where they replenish the water (water sources, rivers, private houses, in the street, vehicle washing areas, etc.) or use the said equipment to clean itself inside and out by means of manual application nozzles if the equipment has these. Another option for cleaning is to use hoses or pressurised water appliances in the above-mentioned places.

To clean equipment for applying phytosanitary products, internal cleaning, including pipes and pressure pump, and external cleaning need to be performed after each use.

The equipment for applying phytosanitary products used currently must have an auxiliary tank with a capacity of 10% of the main tank for rinsing the latter, although not all equipment has the said auxiliary tank. It is important to open all the taps for the circuits, so that residues do not remain in the pipes, and drain the tank as far as possible after each rinse. Treating the treated area again is recommended to eliminate the water.

The recommendation is that cleaning is performed in a controlled area where there is no risk of contamination and there are means for collecting the liquid from cleaning.

Users replenish phytosanitary products in equipment for applying by adding the phytosanitary product manually in the said equipment.

Mixing of phytosanitary products is carried out manually by the users of the said equipment for applying and it is then added to the equipment for applying phytosanitary products.

One disadvantage is the contamination that occurs in the environment when more phytosanitary products than recommended are applied to crops or to the environment, and when equipment for applying is cleaned in inappropriate places. A large amount of phytosanitary product packaging is also dumped or lost, as although there are rules for controlling the said packaging, the amount of phytosanitary product packaging used is so great that it is very difficult to control all the packaging.

Another disadvantage is exposing people, directly or through personal protective equipment, to phytosanitary products when they clean equipment for applying phytosanitary products, mix phytosanitary products and replenish the said equipment.

Document FR2815891 describes a washer comprises used-water tank under pair of perforated tracks on which machine stands during cleaning; and folding tunnel extendable over machine and tank during washing and rinsing to confine water and allow for recovery in tank by gravity, especially by flowing along tunnel inner wall. The washer, especially for crop-spraying machines, has a tank for collecting used water, located underneath a pair of perforated tracks on which the machine stands during cleaning. It also has a folding tunnel that can be extended over the machine and tank during washing and rinsing operations to confine the water and allow it to be recovered in the tank by gravity, especially by flowing along the inner wall of the tunnel. The tank is situated at least partly above ground level and connected to a used water treatment installation divided into sections with filtration/treatment units in each, and access to the perforated tracks is provided by ramps.

Document US3079935 describes a system for cleaning the exterior surfaces of moving objects as trucks and vehicles progressing along a path, with a minimum amount of effort.

Document WO0115824 describes a mobile spray cleaning booth including a wheeled towable trailer frame, a housing which is located on and over the frame and includes inlet and outlet openings, and trolley ramps over which supermarket trolleys may be run into and out of the housing. The housing includes a floor with a portion of the floor over the length of the housing being defined by an endless conveyor with the conveyor belt conveniently being made from a water pervious material. A large capacity water sump is located beneath the central portion of the conveyor.

### Summary

According to an aspect, this invention relates to a machine for collecting liquid comprising the features of claim 1.

The invention has its basis in collecting surplus liquid with phytosanitary products from treatments carried out with equipment for applying phytosanitary products, which is normally discharged into the environment, and, by treating the said liquid, obtaining the phytosanitary product and water for re-use.

### Brief explanation of the drawings

To improve understanding of the above, drawings are attached that, schematically and only by way of example, without being limiting, represent a practical embodiment. In the said drawings:

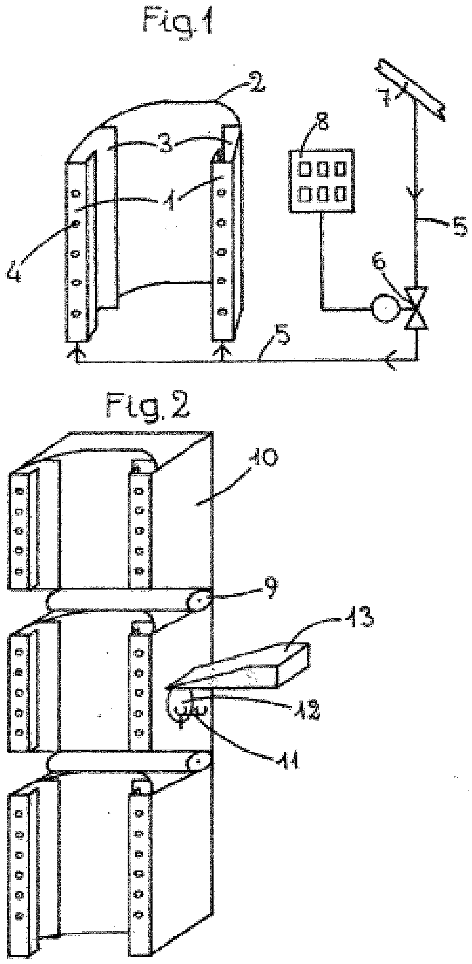

Figure 1 shows a view of the tool for channelling the liquid projected and/or sprayed by equipment for applying phytosanitary products, showing the longitudinal folds (1) in the two side parts that define a U-shaped channel. Also shown in the internal face of the U-shaped body are two longitudinal fins (3), also the mechanisms that project and/or spray water (4) disposed on the longitudinal folds and the schematic representation of the supply to the said mechanisms, in which a water supply pipe (7) can be seen connecting to another pipe (5) that supplies the said mechanisms and is controlled by a solenoid valve (6) that in turn is controlled by a control panel (8).
Figure 2 shows a view of the connection of several tools, as in figure 1, forming an articulated column, showing the articulated joints (9) that enable the said column to adapt to the different projections and/or spraying of the different items of equipment for applying phytosanitary products. It also shows the means for securing a manual application nozzle for the latter to project and/or spray liquid into the said tool, showing a bracket (11) located in the external part of the said tool with two U-shaped supports aligned with an opening (12) in the said tool. Also shown is the cover (13) that holds the said nozzle against the supports and covers the said bracket and closes the said opening if the equipment for applying does not have the said manual application nozzles.

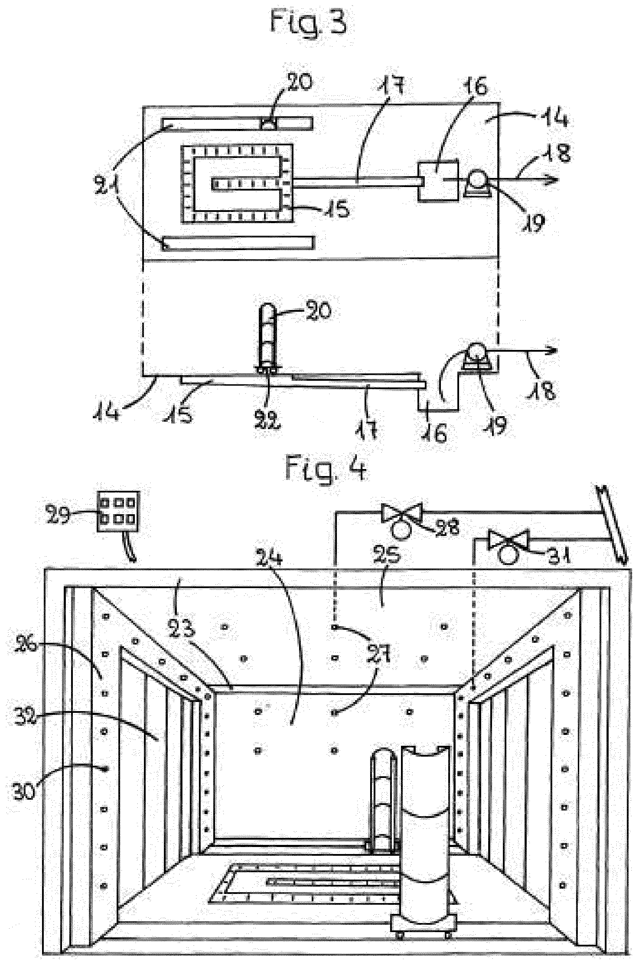

Figure 3 shows a plan view above a cross-sectional view of the said machine, showing a floor (14), a sump (15) arranged on the said floor, a pit (16) connected to the said sump by means of an underground pipe (17), such that the said assembly collects the liquid deposited on the said floor into the said pit. Also represented are a pipe (18) with an impulse pump (19) to draw the liquid out of the pit. A tool for channelling the liquid projected and/or sprayed by equipment for applying (20) can also be seen arranged on a rail (21) and on a wheeled platform (22) to move it.
Figure 4 shows an interior view of the liquid collection zone of the machine, showing a metal structure (23) supporting an isolating wall (24) and an isolating roof (25) and two isolating doors (26). Also seen in the said wall and roof are a plurality of mechanisms that project and/or spray water (27), with a schematic representation of their water supply controlled by a solenoid valve (28), which, in turn, is controlled by a control panel (29), which can be the same panel as for the tool for channelling liquid projected and/or sprayed if it has one. Also shown in the isolating doors are a plurality of mechanisms that project and/or spray water (30) and a schematic representation of their water supply controlled by a solenoid valve (31), which, in turn, is controlled by the said control panel, and also seen in the said doors is a curtain formed of a plurality of plastic strips (32).

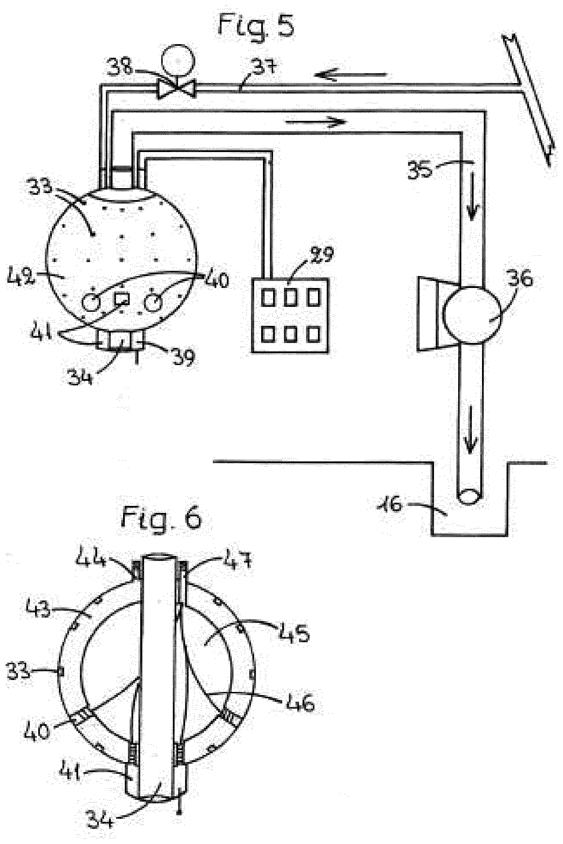

Figure 5 shows a view of the tool for cleaning the inside of equipment for applying phytosanitary products, which projects and sucks up liquid, showing a plurality of mechanisms that project water (33) and a tube to suck up liquid (34), such that the said tube is connected, by means of a pipe (35) with a suction pump (36) to the said pit (16) such that the liquid sucked up is collected in the said pit. It also shows represents the water supply to the said plurality of mechanisms that project water that are connected to a water supply via a pipe (37) controlled by a solenoid valve (38), which, in turn, is controlled by the said control panel (29). Some components of the electrical system are also shown, such as a limit switch (39), two proximity sensors (40) and two liquid level sensors (41) controlled by the said control panel for coordinated operation of the tool. Also shown is the housing (42) in which the mechanisms that project water and the electrical mechanisms are arranged and that is crossed by the said tube to suck up liquid.
Figure 6 shows a cross section of the tool in figure 5, showing two layers inside the housing, showing how the mechanisms that project water (33) are arranged in the surface of the said housing, penetrating to the outermost internal layer (43) that has a tube (44) for water supply. Also shown is how the proximity sensors (40) are arranged in the outermost part of the said housing such that they cross the said outermost layer and penetrate to the innermost layer (45) where the cables (46) are installed that exit the said layer in a tube (47) to connect to the said control panel. The tube to suck up liquid (34) that crosses the housing can also be seen.

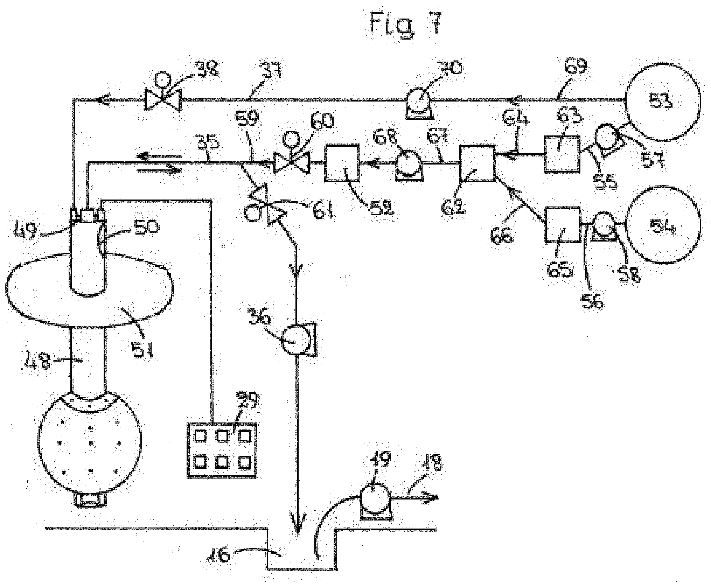

Figure 7 shows a view in which the joint between a tool such as in figure 5 and a rod or handle (48), screwed by one end to the said tool, can be seen. It also shows how the pipes that connect to the tool exit the said rod or handle through the opposite end to the tool (49), which can also exit through a lateral opening (50) in the said end. Also shown is a flat part (51) to close the filler neck of the equipment for applying, which is crossed by the rod or handle through the central part. It also schematically represents the means for replenishing the said machine, in which a dosing unit for water and/or phytosanitary product (52), a refillable tank to store water (53) and a refillable tank to store phytosanitary product (54) are represented, where each tank is connected to a pipe (55)(56) with an impulse pump (57)(58). The said dosing unit supplies water and/or phytosanitary product to the said equipment for applying by means of a pipe (59) that is connected to the said pipe that connects to the tube that crosses the housing of the internal cleaning tool of the said equipment for applying, to suck up liquid (35). The actions of sucking up or supplying are controlled by two solenoid valves (60)(61) that operate alternately by switching the said pipes and that are controlled by the said control panel. Also represented schematically are the means for making the mixture, formed of a mixer of phytosanitary products and water (62), supplied by a water dosing unit (63) by means of a pipe (64) and supplied by a phytosanitary product dosing unit (65) by means of a pipe (66). The said assembly is connected in the said machine in such a way that the said mixture is supplied by means of a pipe (67) with an impulse pump (68) to the dosing unit that supplies phytosanitary product and/or water (52) to the said equipment for applying. The said water dosing unit (63) is supplied by the said refillable water tank (53) by means of the said pipe (55) with the said impulse pump (57) and the said product dosing unit is supplied by the said refillable phytosanitary product tank (54) by means of the said pipe (56) with the said impulse pump (58). Also represented is how the said refillable water tank (53) supplies the mechanisms of the said tool that project water, showing a pipe (69) that connects the said refillable tank to an impulse pump (70) that in turn supplies the said pipe (37) controlled by a solenoid valve (38), which supplies the plurality of mechanisms of the tool that project water for cleaning the inside of equipment for applying.

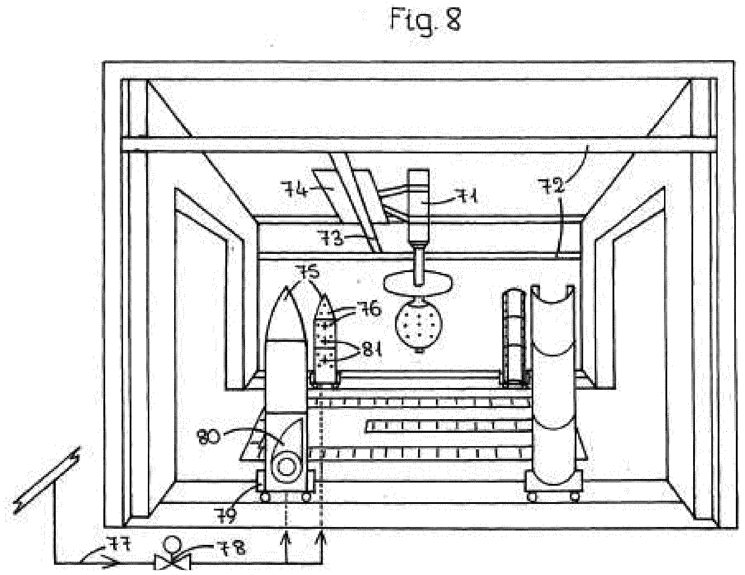

Figure 8 shows an interior view of the liquid collection zone of the machine, showing a telescopic cylinder (71) that is joined by it moveable part to the rod or handle that, in turn, at its other end, is joined to the said tool as of figure 5. Also shown supported by the said structure are two rails (72) on which a moveable bridge (73) is shown on which is a moveable platform (74) that supports the said telescopic cylinder. It also shows two tools for cleaning the outside of the equipment for applying phytosanitary products (75), schematically representing a plurality of mechanisms that project and/or spray water (76), connected by means of a pipe (77) to a water supply controlled by a solenoid valve (78). Also shown are the two wheeled platforms (79) on the rails laid on the floor, such that the said tools are installed on the said wheeled platforms and a turbine (80) can also be seen in the rear part of the said tool, which supplies air to a plurality of mechanisms that project air (81) arranged in the front part of the said tool.

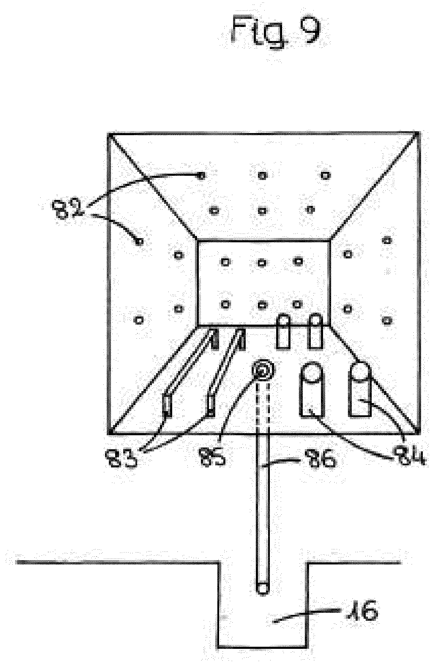

Figure 9 shows an internal view of an apparatus for cleaning the cover and filter of the equipment for applying, showing a plurality of mechanisms that project water (82) in the walls and roof, two brackets to hold the cover (83), four brackets to hold the filter (84) and a sump (85) from which the liquid is transferred by means of a pipe (86) to the said pit (16) to be collected.

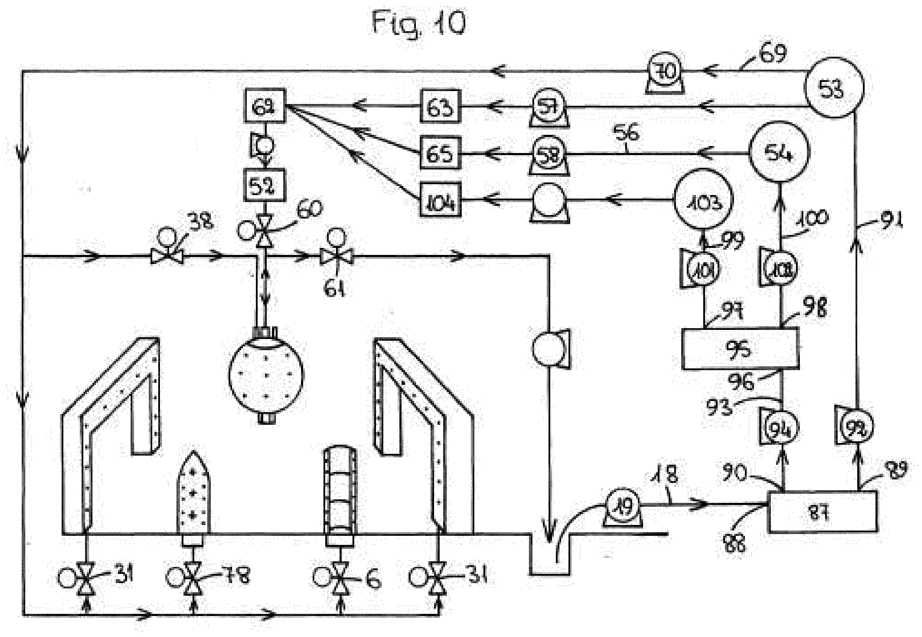

Figure 10 shows the operation of the said installation for recycling phytosanitary product schematically, represented in which are a water purifier (87) to separate the water from the phytosanitary products, which has an inlet for liquid with phytosanitary products (88), a water outlet (89) and a phytosanitary product outlet (90). Also represented is the connection of the pipe (18) used to draw the liquid out of the pit of the said machine to the liquid inlet to the purifier to supply it. It also represents the connection of the water outlet of the purifier to the said refillable water tank (53) of the machine by means of a pipe (91) with an impulse pump (92). It also shows the connection of the phytosanitary product outlet from the purifier, by means of a pipe (93) with an impulse pump (94), to a phytosanitary product separator (95) at the phytosanitary product inlet (96) of the said separator. The said separator also has two different phytosanitary product outlets (97) and (98), each of which connects, by means of a pipe (99) and (100) with an impulse pump (101) and (102), to a refillable phytosanitary product tank (54) and (103) of the machine. Some machine components are also shown with the schematic representation of the water supply to the said components, which is controlled by solenoid valves (6), (31) and (78). Also represented is the connection of the means for replenishing and for mixing of figure 7 in the installation. It also represents the circulation of the liquid with phytosanitary products, of the phytosanitary products and of the water by means of arrows on the pipe representations.

### Description

The main tool for carrying out the said method is the tool for channelling the liquid projected and/or sprayed by equipment for applying phytosanitary products (figure 1), comprising an essentially concave hollow body, with a central part recessed with respect to the two side parts, defining a U-shaped channel, characterised in that it comprises on each side part at least one longitudinal fold (1) oriented towards the concave part of the said body, which in combination with the said side part defines a V- to U-shaped channel designed to prevent the said liquid from escaping from the said body by the said side parts and to channel the said liquid inside it into the concave part of the body.

The said tool is positioned opposite the nozzles of the equipment for applying phytosanitary products such that the said equipment projects and/or sprays the liquid into the concave part of the said body. The liquid is channelled by the said tool to any means of collection, with the liquid exiting the tool by at least one curved side (2) of the said body, depending on its position.

The said tool comprises at least one longitudinal fin (3), preferably a plurality, in the concave part of the U-shaped body and oriented towards the central, most deeply recessed part of the said body, such that each one forms a V-shaped channelling unit and the assembly formed channels the said liquid in a U-shape, using the concave surface of the said tool as the common side part of the said V-shaped channelling units.

According to another embodiment, taking any of the previous into account, the said tool can comprise means for projecting and/or spraying water, which, in turn, may comprise a plurality of mechanisms that project and/or spray water (4) disposed in the longitudinal folds in the front part of the tool and oriented such that with their projection and/or spray they direct in the desired direction the splashes that may be produced when the equipment for applying projects and/or sprays liquid onto the said tool. The said mechanisms are connected, by means of a pipe (5) with a solenoid valve (6), to a water supply network (7) and the said solenoid valve is controlled by a control panel (8).

According to another form of embodiment, taking any of the previous into account, the said tool (figure 2) may comprise connecting means to join it to another tool such as any of those described previously, which, in turn, may comprise at least one articulated joint (9), such that the assembly formed makes it possible to arrange the different forms of the said tool to adapt to the projections and/or spraying of the different types of equipment for applying phytosanitary products.

The said tool may comprise a housing (10) arranged to cover the rear or convex part of the said tool, in addition to the possible circuits that the said tool may hold.

According to another form of embodiment, taking any of the previous into account, the said tool may comprise means for securing at least one manual application nozzle for cleaning it, which, in turn, may comprise a bracket (11) located in the external part of the said tool with two U-shaped supports aligned with an opening (12) in the said tool, such that by supporting the manual treatment nozzle on the said supports it is opposite the said opening, through which it projects and/or sprays liquid into the interior of the said tool for it to be channelled. The said means also comprises a cover (13) arranged on the said opening, which by allowing it to support itself on the manual application nozzle, holds the said nozzle against the supports, and covers the said bracket and closes the said opening if the equipment for applying does not have the said manual application nozzles.

To carry out liquid collection, according to the claimed method, the said machine will be used to collect liquid with surplus phytosanitary products from treatments carried out with equipment for applying phytosanitary products (figure 3), comprising means for collecting liquid, which, in turn, may comprise a floor (14), a sump (15) arranged on the said floor, a pit (16) connected to the said sump by means of an underground pipe (17), such that the said assembly collects the liquid deposited on the said floor into the said pit, which, in turn, may comprise a pipe (18) with an impulse pump (19), characterised in that it comprises means for channelling the liquid projected and/or sprayed by equipment for applying phytosanitary products to the said means for collecting liquid, which, in turn, may comprise at least one tool for channelling the said liquid (20), such as any of those described previously, installed on the said floor, such that the liquid channelled by the said tool, by means of the cited means of collection, is collected in the said pit.

The said means for drawing the liquid from the pit may be used to transfer the liquid to another place or to charge the liquid into a means of transport.

With this form of embodiment, the equipment for applying would be located on the said floor and with the application nozzle(s) of the said equipment facing at least one tool to channel its projection and/or spray to the said means to collect liquid.

This form of embodiment can collect the surplus liquid from treatments carried out with equipment for applying phytosanitary products and/or liquid resulting from the manual cleaning of equipment for applying phytosanitary products, to avoid exposing the environment to the phytosanitary products present in the said liquids and to be able to treat them subsequently to obtain the phytosanitary product for use.

According to another form of embodiment, taking the previous into account, the said machine may comprise means for moving the said at least one tool that channels the liquid projected and/or sprayed by equipment for applying phytosanitary products. The said means may comprise at least one rail (21) laid on the said floor and a wheeled platform (22) on which the said at least one tool is arranged and that moves in a controlled manner on the said rail. In this way, the said tool can be located opposite the nozzles or means of projection and/or spraying of the said equipment for applying. It can be positioned manually or mechanically.

According to another form of embodiment, taking any of the previous into account, the said machine may comprise means of isolation to delimit the liquid collection zone of the said machine (figure 4) and to isolate the said zone from the external environment, inside the said zone is where the equipment for applying for projecting and/or spraying liquid is located. The said means of isolation in turn may comprise a metal structure (23) that supports two isolating walls (24) and one isolating roof (25) and two isolating doors (26). In turn, the said walls and roof may comprise a plurality of mechanisms that project and/or spray water (27) connected to a water supply controlled by a solenoid valve (28), which, in turn, is controlled by a control panel (29), which can be the same as that of the said tool that channels the liquid projected and/or sprayed if same has a control panel, and arranged such that on projecting and/or spraying water, the possible splashes that may occur in the liquid collection zone fall to the floor of the said machine. In turn, the said isolating doors may comprise a plurality of mechanisms that project and/or spray water (30), connected to a water supply controlled by a solenoid valve (31), which, in turn, is controlled by the said control panel, arranged in such a way that when operating they form a curtain of water that prevents splashes with phytosanitary products that may be volatile from escaping through the said door and drives the said splashes to the said floor so that they are finally collected in the said pit. The said doors may also comprise a curtain formed of a plurality of plastic strips (32) that open and close the said door and isolate the said liquid collection zone from the external environment.

The said machine may comprise means for regulating the size of the liquid collection zone of the said machine, which, in turn, may comprise two wheeled platforms for each isolating door that can move in a controlled manner along two parallel rails laid on the floor of the said machine, such that each support base for each door is disposed on a wheeled platform on a different rail.

According to another form of embodiment, taking any of the previous into account, to carry out the internal cleaning of the equipment for applying phytosanitary products, including inside the pipes and pressure equipment of same, the said machine may comprise means for cleaning the inside of equipment for applying phytosanitary products, which, in turn, may comprise a tool that projects water and sucks up liquid (figure 5), comprising in turn a plurality of mechanisms that project water (33) and a tube to suck up liquid (34), such that the said tube is connected, by means of a pipe (35) with a suction pump (36), to the said pit (16) such that the water sucked up is collected in the said pit, and the said plurality of mechanisms that project water are connected to a water supply by means of a pipe (37) controlled by a solenoid valve (38), which, in turn, is controlled by the said control panel (29).

To operate, the said tool in turn comprises at least one limit switch (39) that activates the operation of the said tool once inserted inside the tank of the equipment for applying, at least one proximity sensor (40) to insert the said tool in the said equipment for applying without damaging either the tool or the equipment, and two liquid level sensors (41) to activate the said pump and the said solenoid valve when appropriate, such that the said electrical mechanisms are controlled by the said control panel. The said tool comprises a spherical or oval housing (42), in any material, in which the said plurality of mechanisms that project water and the said electrical mechanisms are arranged and which is crossed by the said tube to suck up liquid.

It also comprises, inside the said housing (figure 6), two independent layers, such that the said outermost layer (43) is connected by means of a tube (44) to the said water supply and the said plurality of mechanisms that project water are arranged fixed on the surface part of the said housing, penetrating to the said layer to receive a supply of water to project, and such that the mechanisms of the electrical system are arranged in the outer part of the tool, crossing the said outermost layer and penetrating to the innermost layer (45), such that the cables (46) for the electrical system mechanisms are installed inside the innermost layers and the cables exit the tool through a tube (47) and connect to the said control panel.

The said tool is inserted into the tanks of the said equipment for applying in operation and located in the liquid collection zone of the said machine to, once inside, project water to clean the equipment for applying internally and suck up the said liquid with phytosanitary products to collect it in the said means for collecting liquid. By performing these actions several times, the said equipment is rinsed more effectively and quickly than if the equipment for applying is provided with a quantity of water for rinsing and then waiting for it to project and/or spray the said quantity of water provided.

This form of embodiment collects the surplus liquid from treatments with equipment for applying phytosanitary products and/or liquid resulting from cleaning of equipment for applying phytosanitary products, even though the external cleaning is performed manually, such that the environment is not exposed to the phytosanitary products that the said liquids contain.

According to another form of embodiment (figure 7), taking the previous into account, the said machine may comprise means for handling the said tool to clean the inside of equipment for applying phytosanitary products, where in turn the said means may comprise a rod or handle (48) screwed at one end to the said tool such that the said rod or handle does not come into contact with the housing or active part of the said tool and it facilitates handling on inserting the said tool into the inside of equipment for applying. In turn, the said rod or handle is hollow and is joined to the said tool such that the pipes for the circuits of the said tool, the said pipes being installed inside the hollow in the rod or handle and such that the said pipes exit the said rod or handle through the opposite end to the tool (49) or they may exit through a lateral opening (50) in the said end.

According to another form of embodiment, taking the previous into account, the said machine may comprise means for closing the filler neck of the equipment for applying during the internal cleaning of the said equipment, which, in turn, may comprise a flat part (51) of any shape, preferably circular, which is crossed by the rod or handle through the central part such that the said flat part closes the filler neck of equipment for applying, when the said tool is inserted inside the said equipment, to prevent splashes produced by this tool in its operation from escaping from the said equipment for applying.

According to another form of embodiment, taking the previous three into account, the said machine may comprise means for replenishing equipment for applying phytosanitary products, which, in turn, may comprise a dosing unit for water and/or phytosanitary product (52), a refillable water tank (53) and a refillable phytosanitary product tank (54), such that each tank supplies the said dosing unit by means of a pipe (55)(56) with an impulse pump (57)(58). The said dosing unit supplies water and/or phytosanitary product to the said equipment for applying by means of a pipe (59) that is connected to the said pipe (35) that connects the said suction pump (36) to the tube of the internal cleaning tool of the said equipment for applying to suck up liquid, such that the said tube, in addition to sucking up liquid, also supplies water and/or phytosanitary product. The actions of sucking up and supplying are controlled by two solenoid valves (60)(61) that operate alternately by switching the said pipes and that in turn are controlled by the said control panel.

This form of embodiment makes it possible to avoid exposing people when replenishing equipment for applying phytosanitary products.

According to another form of embodiment, taking the previous into account, the said machine may comprise means for mixing the phytosanitary products and water. The said means for mixing can mix different products together and also mix the said products with water to obtain the necessary mixture to perform any phytosanitary treatment. The said means may comprise a mixer of phytosanitary products and water (62), supplied by a water dosing unit (63) by means of a pipe (64) and supplied by a phytosanitary product dosing unit (65) by means of a pipe (66). The said assembly is connected in the said machine in such a way that the said mixture is supplied by means of a pipe (67) with an impulse pump (68) to the dosing unit that supplies phytosanitary product and/or water to the said equipment for applying (52). The said water dosing unit (63) is supplied by the said refillable water tank (53) by means of the said pipe (55) with the said impulse pump (57) and the said product dosing unit (65) is supplied by the said refillable phytosanitary product tank (54) by means of the said pipe (56) with the said impulse pump (58).

The said mixer in turn may comprise at least one water supply and at least one phytosanitary product supply, depending on the quantity of products to be mixed and the quantity of water necessary to make the mixture.

This form of embodiment makes it possible to avoid exposing people to the mixing of phytosanitary products and replenishing equipment for applying phytosanitary products with the said phytosanitary products.

According to another form of embodiment, taking the two previous into account, the said machine may comprise, connected to the said refillable water tank (53), a water outlet pipe (69) with an impulse pump (70) to supply water to the said components of the said machine that require a water supply.

According to another form of embodiment, taking any of the previous into account, the said machine (figure 8) may comprise means for moving the said tool vertically for internal cleaning of equipment for applying, which, in turn, may comprise, supported by the said metal structure, a telescopic cylinder (71), which, in turn, supports the said tool at sufficient height to be able to position the said equipment for applying under the said tool.

This form of embodiment makes it possible to insert and remove the said tool mechanically from the said equipment for applying.

According to another form of embodiment, taking the previous into account, the said machine may comprise means for moving the said tool in the horizontal plane, which, in turn, may comprise, supported by the said structure, two rails (72) on which a moveable bridge (73) on which a moveable platform (74) supporting the said telescopic cylinder move.

This form of embodiment makes it possible to move the said tool in any direction.

According to another form of embodiment, taking any of the previous into account, to clean the outside of equipment for applying phytosanitary products, the said machine may comprise means for cleaning the outside of the said equipment for applying, which, in turn, may comprise at least one tool for cleaning the outside of equipment for applying phytosanitary products (75), wherein the said tool in turn comprises a plurality of mechanisms that project and/or spray water (76) connected by means of a pipe (77) to a water supply controlled by a solenoid valve (78). This form of embodiment avoids exposing people to cleaning the outside of the said equipment for applying phytosanitary products.

According to another form of embodiment, taking the previous into account, the said tool may comprise means for moving the said at least one tool for cleaning the outside of equipment for applying phytosanitary products, which, in turn, may comprise a wheeled platform (79) on the said rails laid on the floor, such that the said tools are installed on the said platform. Moving along the said rails, each at least one tool runs along one side of the said liquid collecting zone to clean the said equipment for applying over its entire surface and more effectively.

The said machine may comprise a longer run on the said rails on the floor, such that the said tools for cleaning the outside of equipment for applying phytosanitary products, in the said run, clean, in addition to the outside of the equipment for applying, the outside of tractor vehicles that tow the said equipment for applying. Some equipment for applying is towed by a tractor vehicle that also gets dirty externally when carrying out treatments.

According to another form of embodiment, taking the previous two into account, the said machine may comprise means for projecting air to dry the said equipment after outside cleaning, which, in turn, may comprise in the said at least one tool for cleaning the outside of equipment for applying phytosanitary products, a turbine (80) connected to a plurality of mechanisms to project air (81) arranged in such a manner as to direct the air towards the equipment for applying. This form of embodiment makes it possible to dry the said equipment for applying.

According to another form of embodiment, taking any of the previous into account, the said machine may comprise means for cleaning the cover and filter of the equipment for applying The said means may comprise an apparatus for cleaning the cover and filter of the equipment for applying (figure 9), comprising in turn a plurality of mechanisms that project water (82) in the walls and roof, at least one bracket to hold the cover (83), at least one bracket to hold the filter (84) and a sump (85) that transfers the liquid by means of a pipe (86) to the said pit (16) to be collected.

To manage proper operation and perform the actions automatically, the said machine uses the control panel that allows selection of the actions to be performed. The said control panel comprises a code reader, such that the said code reader can read data from analyses carried out on crops to replenish automatically in the said equipment for applying the quantity and type of product advised in the said analysis for treating the crop on which the said analysis was performed.

To carry out the method described above, the said installation for recycling phytosanitary products will be used (figure 10), comprising means of treating liquid with phytosanitary products to obtain phytosanitary product and/or water, which, in turn, may comprise a water purifier (87) to separate the water from the phytosanitary products, which has an inlet for liquid with phytosanitary products (88), a water outlet (89) and a phytosanitary product outlet (90), characterised in that it comprises means for collecting surplus liquid with phytosanitary products from treatments carried out with equipment for applying phytosanitary products, which, in turn, may comprise at least one machine for collecting the said liquid, such as any of those described above, connected by means of the pipe (18) used to draw the liquid collected in the pit of the said machine to the liquid inlet to the purifier (88) to supply it; the water outlet from the purifier is connected, by means of a pipe (91) with an impulse pump (92), to the refillable water tank (53) of the machine to supply water to it, and the product outlet from the purifier connects, by means of a pipe (93) with an impulse pump (94), to the refillable phytosanitary product tank (54) of the said machine to supply it.

This form of embodiment recycles all the liquid collected by the machine and resolves the aforementioned disadvantages.

According to another form of embodiment, taking the previous into account, the said machine may comprise means for separating phytosanitary products, which, in turn, may comprise a phytosanitary product separator (95) with a phytosanitary product inlet (96) and at least two different phytosanitary product outlets (97) and (98), such that the phytosanitary product outlet from the purifier supplies, by means of the said pipe (93) with the said impulse pump (94), the phytosanitary product inlet to the phytosanitary product separator (95), and the at least two outlets from the said separator (97) (98) connect, by means of a pipe (99) (100) each with an impulse pump (101) (102), to the at least two refillable phytosanitary product tanks (54) (103) of the machine, which, in turn, supply at least two phytosanitary product dosing units (65) (104), which, in turn, supply the said phytosanitary product and water mixer (62).

The method described previously can be performed with the said installation, as well as resolving the disadvantages that occur on performing the said actions of the method according to the previous technique.

## Claims

1. A machine to collect liquid with surplus phytosanitary products from treatments carried out with equipment for applying phytosanitary products, comprising means for collecting liquid comprising a floor (14), a sump (15) arranged on the floor, a pit (16) connected to the sump (15) by means of an underground pipe (17), the assembly collects the liquid deposited on the floor into the pit (16), including an impulse pump (19) with an outlet pipe (18); **wherein** the machine comprises a tool of channelling the liquid projected and/or sprayed by equipment for applying phytosanitary products comprising at least one tool for channelling the liquid (20), installed on the floor; the liquid channelled by the tool is collected in the pit (16), the machine comprises isolating means to delimit the liquid collection zone of said machine and isolate the collection zone from the external environment, comprising a metal structure (23) that supports two isolating walls (24) and one isolating roof (25) and two isolating doors (26); the walls (24) and roof (25) comprises a plurality of mechanisms (27) that project and/or spray water connected to a water supply controlled by a solenoid valve (28), which is controlled by a control panel (29), which can be the same as that of the tool that channels the liquid projected and/or sprayed if this has a control panel, and arranged such that on projecting and/or spraying water, the splashes occurs in the liquid collection zone fall to the floor of the machine; the isolating doors (26) comprises a plurality of mechanisms (30) that project and/or spray water, connected to a water supply controlled by a solenoid valve (31), which is controlled by the control panel (29), arranged for operating they form a curtain of water that prevents splashes with phytosanitary products that may be volatile from escaping through the isolating doors (26) and drives the splashes to the floor so that they are finally collected in the pit (16); the isolating doors (26) also comprises a curtain formed of a plurality of plastic strips (32) that open and close the isolating doors (26) and isolate the liquid collection zone from the external environment.

2. Machine according to claim 1, **characterised in that** the machine comprises means for moving the tool (20) for channelling the liquid projected and/or sprayed by equipment for applying phytosanitary products comprising at least one rail (21) laid on the floor (14) and a wheeled platform (22) on which the at least one tool is arranged and that moves in a controlled manner on the rail (21).

3. Machine according to claim 2, **characterised in that** the machine comprises means for cleaning the inside of equipment for applying phytosanitary products, comprising a tool that projects water and sucks up liquid, comprising a plurality of mechanisms that project water (33) and a tube (34) to suck up liquid, the tube (34) is connected to the pit (16) by means of a pipe (35) with an interconnected suction pump (36); the plurality of mechanisms that project water (33) are connected to a water supply by means of a pipe (37) controlled by a solenoid valve (38), which is controlled by the control panel (29); to operate, comprising at least one limit switch (39), at least one proximity sensor (40) and two liquid level sensors (41); the tool comprises a spherical or oval housing (42) in which the plurality of mechanisms that project water (33) and an electrical system mechanisms are arranged and that is crossed by the tube (34) to suck up liquid; two independent layers are located inside the housing, the outermost layer (43) is connected by means of a tube (44) to the water supply and the plurality of mechanisms that project water (33) are arranged fixed on the surface part of the housing, penetrating to the layer to receive a supply of water, and the electrical system mechanisms are arranged in the outer part of the tool, crossing the outermost layer (43) and penetrating to the innermost layer (45), cables (46) of the electrical system mechanisms are installed inside the innermost layers (45) and the cables (46) exit the tool through a tube (47) and connect to the control panel (29).

4. Machine according to claim 3, **characterised in that** the machine comprises means for handling the tool to clean the inside of equipment for applying phytosanitary products, where the means comprises a rod or handle (48) screwed at one end to the tool; the rod or handle is hollow and is joined to the tool the such that pipes for the circuits the tool has, the pipes being installed inside the hollow in the rod or handle and the pipes exit the rod or handle through the opposite end to the tool (49) or they exit through a lateral opening (50) in the end.

5. Machine according to claim 4, **characterised in that** the machine comprises means for closing a filler neck of the equipment for applying phytosanitary products during the internal cleaning of the equipment, which comprises a flat part (51) of any shape such as circular, which is crossed by the rod or handle through the central part; the flat part closes the filler neck of equipment for applying phytosanitary products to prevent splashes produced by the tool in its operation from escaping from the equipment for applying phytosanitary products.

6. Machine according to claim 5, **characterised in that** the machine comprises means for replenishing equipment for applying phytosanitary products, which comprises a dosing unit for water and/or phytosanitary product (52), a refillable water tank (53) and a refillable phytosanitary product tank (54), each tank 8549 supplies the dosing unit by means of a pipe (55, 56) with an impulse pump (57, 58); the dosing unit supplies water and/or phytosanitary product to the equipment for applying phytosanitary products by means of a pipe (59) that is connected to the pipe (35) that connects the suction pump (36) to the tube of the internal cleaning tool of the equipment for applying phytosanitary products to suck up liquid, the tube, in addition to sucking up liquid, also supplies water and/or phytosanitary product; the actions of sucking up and supplying are controlled by two solenoid valves (60, 61) that operate alternately by switching the pipes and that are controlled by the control panel.

7. Machine according to claim 6, **characterised in that** the machine comprises means for making the mixture of phytosanitary products and water, which comprises a mixer of phytosanitary products and water (62), supplied by a water dosing unit (63) by means of a pipe (64) and supplied by a phytosanitary product dosing unit (65) by means of a pipe (66); the assembly is connected in the machine in such a way that the mixture is supplied by means of a pipe (67) with an impulse pump (68) to the dosing unit that supplies phytosanitary product and/or water (52) to the equipment for applying phytosanitary products; the water dosing unit (63) is supplied by the refillable water tank (53) by means of the pipe (55) with the impulse pump (57) and the product dosing unit (54) is supplied by the refillable phytosanitary product tank (54) by means of the pipe (56) with the impulse pump (58).

## Patentansprüche

1. Eine Maschine zum Auffangen von Flüssigkeit mit überschüssigen Pflanzenschutzmitteln aus Behandlungen
ausgeführt mit einer Ausrüstung zum Ausbringen von Pflanzenschutzmitteln, die eine Einrichtung zum Sammeln von Flüssigkeit umfasst, die einen Boden (14), einen auf dem Boden angeordneten Sumpf (15) und eine mit dem Sumpf (15) über eine unterirdische Leitung (17) verbundene Grube (16) umfasst, wobei die Anordnung die auf dem Boden abgelagerte Flüssigkeit in der Grube (16) auffängt und eine Impulspumpe (19) mit einer Auslassleitung (18) enthält; **wobei** die Maschine ein Werkzeug zum Kanalisieren der Flüssigkeit umfasst, die von der Ausrüstung zum Ausbringen von Pflanzenschutzmitteln, die mindestens ein Werkzeug zum Kanalisieren der Flüssigkeit (20) umfasst, auf den Boden gespritzt und/oder gesprüht wird; die von dem Werkzeug kanalisierte Flüssigkeit wird in der Grube (16) aufgefangen, die Maschine umfasst Isoliermittel, um die Zone zum Auffangen der Flüssigkeit der Maschine abzugrenzen und die Auffangzone von der äußeren Umgebung zu isolieren, umfassend eine Metallstruktur (23), die zwei Isolierwände (24) und ein Isolierdach (25) und zwei Isoliertüren (26) trägt; die Wände (24) und das Dach (25) umfassen eine Vielzahl von Mechanismen (27), die Wasser spritzen und/oder sprühen und mit einer Wasserversorgung verbunden sind, die von einem Magnetventil (28) gesteuert wird, das von einem Bedienfeld (29) gesteuert wird, das dasselbe sein kann wie das des Werkzeugs, das die gespritzte und/oder gesprühte Flüssigkeit kanalisiert, wenn dieses über ein Bedienfeld verfügt, und das so angeordnet ist, dass beim Spritzen und/oder Sprühen von Wasser die in der Zone zum Auffangen der Flüssigkeit auftretenden Spritzer auf den Boden der Maschine fallen; die Isoliertüren (26) umfassen eine Vielzahl von Mechanismen (30), die Wasser spritzen und/oder sprühen, die mit einer Wasserversorgung verbunden sind, die von einem Magnetventil (31) gesteuert wird, das von der Schalttafel (29) gesteuert wird, und die so angeordnet sind, dass sie im Betrieb einen Wasservorhang bilden, der verhindert, dass Spritzer mit Pflanzenschutzmitteln, die flüchtig sein können, durch die Isoliertüren (26) entweichen, und der die Spritzer auf den Boden treibt, so dass sie schließlich in der Grube (16) aufgefangen werden; die Isoliertüren umfassen (26) auch einen Vorhang, der aus einer Vielzahl von Kunststoffstreifen (32) besteht, die die Isoliertüren (26) öffnen und schließen und die Zone zum Auffangen der Flüssigkeit von der äußeren Umgebung isolieren.

2. Maschine nach Anspruch 1, **dadurch gekennzeichnet, dass** die Maschine Mittel zum Bewegen des Werkzeugs (20) zum Leiten der von der Ausrüstung zum Ausbringen von Pflanzenschutzmitteln ausgestoßenen und/oder versprühten Flüssigkeit umfasst, die mindestens eine auf dem Boden (14) verlegte Schiene (21) und eine mit Rädern versehene Plattform (22) umfassen, auf der das mindestens eine Werkzeug angeordnet ist und die sich gesteuert auf der Schiene (21) bewegt.

3. Maschine nach Anspruch 2, **dadurch gekennzeichnet, dass** die Maschine Mittel zum Reinigen der Innenseite von Geräten zum Ausbringen von Pflanzenschutzmitteln umfasst, die ein Werkzeug zum Ausstoßen von Wasser und zum Aufsaugen von Flüssigkeit umfassen, das eine Vielzahl von Mechanismen zum Ausstoßen von Wasser (33) und ein Rohr (34) zum Aufsaugen von Flüssigkeit umfasst, wobei das Rohr (34) mit der Grube (16) über eine Leitung (35) mit einer angeschlossenen Saugpumpe (36) verbunden ist; die mehreren Mechanismen, die Wasser ausstoßen (33), über eine Leitung (37) mit einer Wasserversorgung verbunden sind, die durch ein Magnetventil (38) gesteuert wird, das von der Schalttafel (29) gesteuert wird; zum Betrieb mindestens einen Endschalter (39), mindestens einen Näherungssensor (40) und zwei Flüssigkeitsstandssensoren (41) umfasst; das Werkzeug ein kugelförmiges oder ovales Gehäuse (42) umfasst, in dem die mehreren Mechanismen, die Wasser ausstoßen (33), und ein elektrischer Systemmechanismus angeordnet sind und das von dem Rohr (34) zum Ansaugen von Flüssigkeit durchquert wird; Im Inneren des Gehäuses befinden sich zwei unabhängige Schichten, wobei die äußerste Schicht (43) durch ein Rohr (44) mit der Wasserversorgung verbunden ist und die mehreren Mechanismen, die Wasser ausstoßen (33), fest auf dem Oberflächenteil des Gehäuses angeordnet sind und in die Schicht eindringen, um eine Wasserversorgung aufzunehmen, und die Mechanismen des elektrischen Systems sind im äußeren Teil des Werkzeugs angeordnet, durchqueren die äußerste Schicht (43) und dringen in die innerste Schicht (45) ein, die Kabel (46) der Mechanismen des elektrischen Systems sind in den innersten Schichten (45) installiert und die Kabel (46) treten durch ein Rohr (47) aus dem Werkzeug aus und verbinden sich mit dem Bedienfeld (29).

4. Maschine nach Anspruch 3, **dadurch gekennzeichnet, dass** die Maschine Mittel zur Handhabung des Werkzeugs umfasst, um das Innere von Geräten zum Ausbringen von Pflanzenschutzmitteln zu reinigen, wobei die Mittel eine Stange oder einen Griff (48) umfassen, die/der an einem Ende mit dem Werkzeug verschraubt ist; die Stange oder der Griff ist hohl und so mit dem Werkzeug verbunden, dass Rohre für die Kreisläufe, die das Werkzeug hat, in dem Hohlraum in der Stange oder dem Griff installiert sind und die Rohre die Stange oder den Griff durch das dem Werkzeug gegenüberliegende Ende (49) verlassen oder durch eine seitliche Öffnung (50) im Ende austreten.

5. Maschine nach Anspruch 4, **dadurch gekennzeichnet, dass** die Maschine Mittel zum Verschließen eines Einfüllstutzens des Geräts zum Ausbringen von Pflanzenschutzmitteln während der Innenreinigung des Geräts umfasst, die ein flaches Teil (51) beliebiger Form, wie z. B. kreisförmig, umfassen, das von der Stange oder dem Griff durch den mittleren Teil durchquert wird; das flache Teil verschließt den Einfüllstutzen des Geräts zum Ausbringen von Pflanzenschutzmitteln, um zu verhindern, dass Spritzer, die vom Werkzeug bei seinem Betrieb erzeugt werden, aus dem Gerät zum Ausbringen von Pflanzenschutzmitteln austreten.

6. Maschine nach Anspruch 5, **dadurch gekennzeichnet, dass** die Maschine Mittel zum Nachfüllen der Ausrüstung zum Ausbringen von Pflanzenschutzmitteln umfasst, die eine Dosiereinheit für Wasser und/oder Pflanzenschutzmittel (52), einen nachfüllbaren Wassertank (53) und einen nachfüllbaren Pflanzenschutzmitteltank (54) umfasst, wobei jeder Tank (54) die Dosiereinheit über eine Leitung (55, 56) mit einer Impulspumpe (57, 58) versorgt; die Dosiereinheit versorgt das Gerät zum Ausbringen von Pflanzenschutzmitteln mit Wasser und/oder Pflanzenschutzmittel über eine Leitung (59), die mit der Leitung (35) verbunden ist, die die Saugpumpe (36) mit dem Rohr des Innenreinigungswerkzeugs des Geräts zum Ausbringen von Pflanzenschutzmitteln verbindet, um Flüssigkeit anzusaugen, wobei das Rohr zusätzlich zum Ansaugen von Flüssigkeit auch Wasser und/oder Pflanzenschutzmittel zuführt; die Aktionen des Aufsaugens und der Zufuhr werden durch zwei Magnetventile (60, 61) gesteuert, die abwechselnd durch Umschalten der Rohre arbeiten und vom Bedienfeld gesteuert werden.

7. Maschine nach Anspruch 6, **dadurch gekennzeichnet, dass** die Maschine Mittel zur Herstellung der Mischung aus Pflanzenschutzmitteln und Wasser umfasst, die einen Mischer für Pflanzenschutzmittel und Wasser (62) umfasst, der über eine Leitung (64) von einer Wasserdosiereinheit (63) versorgt wird und über eine Leitung (66) von einer Pflanzenschutzmitteldosiereinheit (65) versorgt wird; die Baugruppe ist in der Maschine so angeschlossen, dass das Gemisch über eine Leitung (67) mit einer Impulspumpe (68) der Dosiereinheit zugeführt wird, die das Pflanzenschutzmittel und/oder Wasser (52) an die Ausrüstung zum Ausbringen von Pflanzenschutzmitteln liefert; die Wasserdosiereinheit (63) wird über die Leitung (55) mit der Impulspumpe (57) von dem nachfüllbaren Wassertank (53) und die Produktdosiereinheit (65) über die Leitung (56) mit der Impulspumpe (58) von dem nachfüllbaren Pflanzenschutzmitteltank (54) versorgt.

## Revendications

1. Une machine pour collecter le liquide avec des produits phytosanitaires excédentaires à partir de traitements
réalisée avec un équipement pour appliquer des produits phytosanitaires, comprenant des moyens pour collecter le liquide comprenant un plancher (14), un puisard (15) disposé sur le plancher, une fosse (16) reliée au puisard (15) au moyen d'un tuyau souterrain (17), l'ensemble collectant le liquide déposé sur le plancher dans la fosse (16), comprenant une pompe à impulsion (19) avec un tuyau de sortie (18) ; **dans laquelle** la machine comprend un outil de canalisation du liquide projeté et/ou pulvérisé par l'équipement pour appliquer des produits phytosanitaires comprenant au moins un outil pour canaliser le liquide (20), installé sur le sol ; le liquide canalisé par l'outil est recueilli dans la fosse (16), la machine comprenant des moyens d'isolement pour délimiter la zone de collecte de liquide de ladite machine et isoler la zone de collecte de l'environnement extérieur, comprenant une structure métallique (23) qui supporte deux parois d'isolement (24) et un toit d'isolement (25) et deux portes d'isolement (26) ; les parois (24) et le toit (25) comprenant une pluralité de mécanismes (27) qui projettent et/ou pulvérisent de l'eau connectée à une alimentation en eau commandée par une électrovanne (28), qui est commandée par un panneau de commande (29), qui peut être le même que celui de l'outil qui canalise le liquide projeté et/ou pulvérisé si celui-ci comporte un panneau de commande, et disposé de telle sorte que lors de la projection et/ou de la pulvérisation d'eau, les éclaboussures se produisent dans la zone de collecte de liquide tombent sur le plancher de la machine ; les portes d'isolation (26) comprennent une pluralité de mécanismes (30) qui projettent et/ou pulvérisent de l'eau, reliée à une alimentation en eau commandée par une électrovanne (31), qui est commandée par le panneau de commande (29), agencé pour fonctionner, ils forment un rideau d'eau qui empêche les éclaboussures avec des produits phytosanitaires qui peuvent être volatils de s'échapper à travers les portes d'isolation (26) et pousse les éclaboussures vers le sol de sorte qu'elles soient finalement collectées dans la fosse (16) ; les portes d'isolation (26) comprennent également un rideau formé d'une pluralité de bandes en plastique (32) qui ouvrent et ferment les portes d'isolation (26) et isolent la zone de collecte de liquide de l'environnement extérieur.

2. Machine selon la revendication 1, **caractérisée en ce que** la machine comprend des moyens de déplacement de l'outil (20) pour canaliser le liquide projeté et/ou pulvérisé par un équipement d'application de produits phytosanitaires comprenant au moins un rail (21) posé sur le sol (14) et une plate-forme à roues (22) sur laquelle est disposé le ou les outils et qui se déplace de manière contrôlée sur le rail (21).

3. Machine selon la revendication 2, **caractérisée en ce que** la machine comprend des moyens pour nettoyer l'intérieur d'un équipement pour appliquer des produits phytosanitaires, comprenant un outil qui projette de l'eau et aspire du liquide, comprenant une pluralité de mécanismes qui projettent de l'eau (33) et un tube (34) pour aspirer du liquide, le tube (34) est relié à la fosse (16) au moyen d'un tuyau (35) avec une pompe d'aspiration interconnectée (36) ; la pluralité de mécanismes qui projettent de l'eau (33) sont reliés à une alimentation en eau au moyen d'une un tuyau (37) commandé par une électrovanne (38), qui est commandée par le panneau de commande (29) ; pour fonctionner, comprenant au moins un commutateur de fin de course (39), au moins un capteur de proximité (40) et deux capteurs de niveau de liquide (41) ; l'outil comprend un logement sphérique ou ovale (42) dans lequel est disposée la pluralité de mécanismes qui projettent de l'eau (33) et des mécanismes de système électrique et qui est traversé par le tube (34) pour aspirer du liquide ; deux couches indépendantes sont situées à l'intérieur du logement, la couche la plus à l'extérieur (43) est reliée par un tube (44) à l'alimentation en eau et la pluralité de mécanismes qui projettent de l'eau (33) sont disposés de manière fixe sur la partie de surface du boîtier, pénétrant dans la couche pour recevoir une alimentation en eau, et les mécanismes de système électrique sont disposés dans la partie extérieure de l'outil, traversant la couche la plus à l'extérieur (43) et pénétrant dans la couche la plus à l'intérieur (45), des câbles (46) des mécanismes de système électrique sont installés à l'intérieur des couches les plus à l'intérieur (45) et les câbles (46) sortent de l'outil par un tube (47) et sont reliés au panneau de commande (29).

4. Machine selon la revendication 3, **caractérisée en ce que** la machine comprend des moyens de manipulation de l'outil pour nettoyer l'intérieur d'un équipement d'application de produits phytosanitaires, dans laquelle les moyens comprennent une tige ou une poignée (48) vissée à une extrémité à l'outil ; la tige ou la poignée est creuse et est reliée à l'outil de telle sorte que des tuyaux pour les circuits de l'outil ont, les tuyaux étant installés à l'intérieur de la cavité dans la tige ou la poignée et les tuyaux sortant de la tige ou de la poignée par l'extrémité opposée à l'outil (49) ou ils sortent par une ouverture latérale (50) dans l'extrémité.

5. Machine selon la revendication 4, **caractérisée en ce que** la machine comprend des moyens pour fermer un goulot de remplissage de l'équipement pour appliquer des produits phytosanitaires pendant le nettoyage interne de l'équipement, qui comprend une partie plate (51) de toute forme telle que circulaire, qui est traversée par la tige ou la poignée à travers la partie centrale ; la partie plate ferme le goulot de remplissage de l'équipement pour appliquer des produits phytosanitaires pour empêcher les éclaboussures produites par l'outil dans son fonctionnement de s'échapper de l'équipement pour appliquer des produits phytosan itai res.

6. Machine selon la revendication 5, **caractérisée en ce que** la machine comprend des moyens de réapprovisionnement en équipements d'application de produits phytosanitaires, qui comprennent une unité de dosage d'eau et/ou de produit phytosanitaire (52), un réservoir d'eau rechargeable (53) et un réservoir de produit phytosanitaire rechargeable (54), chaque réservoir (54) alimente l'unité de dosage au moyen d'une conduite (55, 56) avec une pompe à impulsion (57, 58) ; l'unité de dosage alimente en eau et/ou en produit phytosanitaire l'équipement d'application de produits phytosanitaires au moyen d'une conduite (59) qui est reliée à la conduite (35) qui relie la pompe d'aspiration (36) au tube de l'outil de nettoyage interne de l'équipement d'application de produits phytosanitaires pour aspirer du liquide, le tube, en plus d'aspirer du liquide, alimente également en eau et/ou en produit phytosanitaire ; les actions d'aspiration et d'alimentation sont commandées par deux électrovannes (60, 61) qui fonctionnent alternativement en commutant les conduites et qui sont commandées par le panneau de commande.

7. Machine selon la revendication 6, **caractérisée en ce que** la machine comprend des moyens pour fabriquer le mélange de produits phytosanitaires et d'eau, qui comprend un mélangeur de produits phytosanitaires et d'eau (62), alimenté par une unité de dosage d'eau (63) au moyen d'un tuyau (64) et alimenté par une unité de dosage de produit phytosanitaire (65) au moyen d'un tuyau (66) ; l'ensemble est raccordé dans la machine de telle sorte que le mélange est alimenté au moyen d'un tuyau (67) avec une pompe à impulsion (68) à l'unité de dosage qui alimente le produit phytosanitaire et/ou l'eau (52) à l'équipement pour appliquer des produits phytosanitaires ; l'unité de dosage d'eau (63) est alimentée par le réservoir d'eau rechargeable (53) au moyen du tuyau (55) avec la pompe à impulsion (57) et l'unité de dosage de produit (65) est alimentée par le réservoir de produit phytosanitaire rechargeable (54) au moyen du tuyau (56) avec la pompe à impulsion (58).
